# EUROPÄISCHE PATENTANMELDUNG

(11) **EP 4 585 629 A1**
(43) Veröffentlichungstag der Anmeldung: **16.07.2025**
(21) Anmeldenummer: 24151619.4
(22) Anmeldetag: 12.01.2024
(51) Int. Cl.: C08G 16/02, C08G 16/06, C08G 18/10, C08G 18/28, C08G 18/48, C08G 18/75, C08G 18/80, C08K 3/04, C08K 3/105, C08K 3/34, C08K 5/12, C08K 5/357, C08L 61/34

(54) **HÄRTBARE ZUSAMMENSETZUNG ENTHALTEND EIN ALDEHYD-FUNKTIO-NELLES POLYMER, VERBINDUNGEN MIT AKTIVIERTEN METHYLENGRUP-PEN UND EINEN BESCHLEUNIGER MIT SEKUNDÄRER AMINGRUPPE**

(71) Anmelder: Sika Technology AG, 6340 Baar (CH)
(72) Erfinder: KRAMER, Andreas, 8008 Zürich (CH); BURCKHARDT, Urs, 8049 Zürich (CH)
(74) Vertreter: Sika Patent Attorneys

(57) **Zusammenfassung**

Gegenstand der Erfindung ist eine härtbare Zusammensetzung umfassend mindestens ein Polymer **A** mit Aldehydgruppen und einem mittleren Molekulargewicht Mₙ von 750 bis 20'000 g/mol, mindestens eine Verbindung **B** mit aktivierten Methylengruppen der Formel (I), und mindestens einen Beschleuniger **C** enthaltend mindestens eine sekundäre Aminogruppe.

Die Zusammensetzung basiert auf toxikologisch wenig bedenklichen Stoffen und ist nicht empfindlich gegenüber Feuchtigkeit und Blasenbildung. Sie ermöglicht bei Umgebungsbedingungen härtbare elastische Klebstoffe, Dichtstoffe und Beschichtungen mit langer Verarbeitungszeit und schneller, störungsfreier Aushärtung, welche insbesondere in Schichtdicken von 1 mm und mehr, bevorzugt 1 bis 25 mm, appliziert werden und nach der Aushärtung über eine besonders hohe Dehnung und einen besonders hohen Weiterreisswiderstand verfügen.

## Beschreibung

### Technisches Gebiet

Die Erfindung betrifft bei Umgebungsbedingungen härtbare Zusammensetzungen enthaltend ein Polymer mit Aldehydgruppen, Verbindungen mit aktivierten Methylengruppen und einen Beschleuniger mit sekundärer Amingruppe, sowie ihre Verwendung als elastische Klebstoffe, Dichtstoffe oder Beschichtungen.

### Stand der Technik

Reaktive Polymerzusammensetzungen, die bei Umgebungsbedingungen aushärtbar sind und als elastische Klebstoffe, Dichtstoffe oder Beschichtungen verwendet werden können, sind bekannt.

Weit verbreitet sind Polyurethansysteme, die durch die Reaktion von Isocyanatgruppen mit Polyolen und/oder Feuchtigkeit aushärten und besonders elastische Polymere bilden. Solche Zusammensetzungen enthalten zumeist erhebliche Mengen an gesundheitsschädlichen monomeren Diisocyanaten, welche den Anwender gefährden und Schutzmassnahmen bei der Handhabung notwendig machen können. Zudem kann bei der Aushärtung entstehendes Kohlendioxid zu Blasenbildung führen. Dies kann zwar mit der Verwendung von latenten Härtern wie insbesondere Aldiminen verhindert werden. Dabei werden bei der Aushärtung aber Aldehyde freigesetzt, welche nicht in die Polymermatrix eingebunden werden und zu Problemen mit Emission und/oder Geruchsbildung führen können, oder in der ausgehärteten Zusammensetzung verbleiben, wo sie eine weichmachende Wirkung ausüben und/oder aus der Zusammensetzung migrieren können.

Weiterhin bekannt sind härtbare Polymerzusammensetzungen auf der Basis von silanfunktionellen Polymeren und Silikonen. Diese härten mit Luftfeuchtigkeit durch Hydrolyse und Kondensation von Silangruppen aus, wobei Alkohole, vor allem Methanol oder Ethanol, Essigsäure oder Oxime freigesetzt werden, welche giftig sind und VOC- und/oder Geruchs-Emissionen verursachen können. Zudem enthalten sie als Vernetzer und/oder Trocknungsmittel typischerweise hohe Mengen an niedrigmolekularen Silanen, welche ebenfalls gesundheitsschädlich sind.

US 2020/0181395 beschreibt härtbare Zusammensetzungen enthaltend ein Acetoacetat-funktionelles Polymer, ein Polyaldehyd und einen Aminkatalysator mit primärer oder sekundärer Amingruppe. Die beschriebenen Zusammensetzungen werden in dünner Schicht als Laminierklebstoffe für flexible Substrate eingesetzt. Dabei ermöglicht der Aminkatalysator Verklebungen mit besonders guter Haftung.

### Darstellung der Erfindung

Aufgabe der vorliegenden Erfindung ist es, eine bei Umgebungsbedingungen härtbare Zusammensetzung zur Verfügung zu stellen, welche geeignet ist als elastischer Klebstoff, Dichtstoff oder Beschichtung und die Nachteile des Standes der Technik überwindet, insbesondere in Bezug auf toxische Inhaltsstoffe, Blasenbildung und Emissionen durch bei der Aushärtung nicht in die Polymermatrix eingebundene Substanzen.

Überraschenderweise wird diese Aufgabe mit einer härtbaren Zusammensetzung wie in Anspruch 1 beschrieben gelöst. Die Zusammensetzung umfasst ein Polymer **A** mit Aldehydgruppen, eine Verbindung **B** mit aktivierten Methylengruppen der Formel (I) und einen Beschleuniger **C** mit mindestens einer sekundären aliphatischen Aminogruppe. Die erfindungsgemässe Zusammensetzung basiert auf toxikologisch wenig bedenklichen Stoffen und ist nicht empfindlich gegenüber Feuchtigkeit und Blasenbildung. Sie ermöglicht bei Umgebungsbedingungen härtbare elastische Klebstoffe, Dichtstoffe und Beschichtungen mit langer Verarbeitungszeit und schneller, störungsfreier Aushärtung, welche insbesondere in Schichtdicken von 1 mm und mehr, bevorzugt 1 bis 25 mm, appliziert werden und nach der Aushärtung über eine besonders hohe Dehnung und einen besonders hohen Weiterreisswiderstand verfügen. Im Vergleich zu entsprechenden Zusammensetzungen, welche anstelle des Beschleunigers **C** andere Stickstoff-haltige Katalysatoren enthalten, ermöglicht die erfindungsgemässe Zusammensetzung eine überraschend hohe Dehnung und einen überraschend hohen Weiterreisswiderstand der ausgehärteten Zusammensetzung. Durch die Aushärtung entsteht ein nicht-klebriges, elastisches Polymer von hoher Festigkeit, hoher Dehnbarkeit, hohem Weiterreisswiderstand und guter Beständigkeit gegen Hitze und Wasser.

Durch die Kombination dieser vorteilhaften Eigenschaften verfügt die härtbare Zusammensetzung über eine besonders einfache Handhabung ohne besondere Schutzmassnahmen und eine hohe Robustheit bei mechanischer, thermischer oder chemischer Belastung nach der Aushärtung.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine härtbare Zusammensetzung umfassend
- mindestens ein Polymer **A** mit Aldehydgruppen und einem mittleren Molekulargewicht Mₙ von 750 bis 20'000 g/mol, gemessen mittels Gelpermeationschromatographie (GPC) gegen Polystyrol als Standard,
- mindestens eine Verbindung **B** mit aktivierten Methylengruppen der Formel (I), 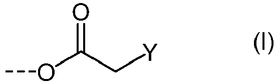 wobei Y für einen Rest der Formel ---CN , 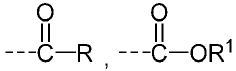 oder 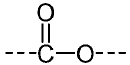 steht, R für einen einwertigen Kohlenwasserstoffrest mit 1 bis
   10 C-Atomen steht und R¹ für einen Alkylrest mit 1 bis 6 C-Atomen steht, und
- mindestens einen Beschleuniger **C** enthaltend mindestens eine sekundäre Aminogruppe.

Eine gestrichelte Linie in den Formeln in diesem Dokument stellt jeweils die Bindung zwischen einem Substituenten und dem zugehörigen Molekülrest dar. Als "Molekulargewicht" wird die molare Masse (in Gramm pro Mol) eines Moleküls bezeichnet. Als "mittleres Molekulargewicht" wird das Zahlenmittel des Molekulargewichts (Mₙ) einer polydispersen Mischung von oligomeren oder polymeren Molekülen bezeichnet. Es wird mittels Gelpermeationschromatographie (GPC) gegen Polystyrol als Standard bestimmt.

Der Begriff "Polymer" umfasst auch sogenannte Oligomere mit zwei, drei oder vier Repetiereinheiten.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.

Als "lagerstabil" wird eine Zusammensetzung bezeichnet, wenn sie bei Raumtemperatur in einem geeigneten Gebinde während längerer Zeit, typischerweise während mindestens drei Monaten bis zu sechs Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Bevorzugt liegt das Verhältnis der Anzahl aktivierte Methylengruppen der Formel (I) zur Anzahl Aldehydgruppen in der härtbaren Zusammensetzung im Bereich von 0.6 bis 2.5, bevorzugt 0.7 bis 2.0, mehr bevorzugt 0.8 bis 1.7, besonders bevorzugt 0.9 bis 1.5, insbesondere 0.9 bis 1.2. Dies ermöglicht ausgehärtete Zusammensetzungen mit hoher Festigkeit, hoher Dehnbarkeit und hohem Weiterreisswiderstand.

Bevorzugt weist das Polymer **A** ein mittleres Molekulargewicht Mₙ von 1'000 bis 15'000 g/mol, insbesondere 2'000 bis 10'000 g/mol, auf.

Bevorzugt weist das Polymer **A** eine mittlere Aldehyd-Funktionalität von 1.6 bis 4.0, bevorzugt 1.8 bis 3.5, besonders bevorzugt 2.0 bis 3.0, insbesondere 2.2 bis 3.0, auf.

Besonders bevorzugt weist das Polymer **A** ein mittleres Molekulargewicht Mₙ von 1'000 bis 15'000 g/mol, insbesondere 2'000 bis 10'000 g/mol, und eine mittlere Aldehyd-Funktionalität von 1.6 bis 4.0, bevorzugt 1.8 bis 3.5, besonders bevorzugt 2.0 bis 3.0, insbesondere 2.2 bis 3.0, auf.

Besonders bevorzugt ist das Polymer **A** ein Polyetherpolymer.

Bevorzugt enthält das Polymer **A** Oxyalkylen-Repetiereinheiten ausgewählt aus der Liste bestehend aus Oxy-1,2-propylen, Oxy-1,3-propylen, Oxy-1,4-butylen, Oxy-1,2-butylen und Oxyphenylethylen. Zusätzlich kann das Polymer **A** einen gewissen Gehalt an Oxy-1,2-ethylen Einheiten aufweisen, insbesondere höchstens 25 Gewichts-% Oxy-1,2-ethylen bezogen auf das Gesamtgewicht der Poly-(oxyalkylen)-Einheiten.

Ein ganz besonders bevorzugtes Polymer **A** enthält ein Poly(oxy-1,2-propylen)-Rückgrat, wobei dieses einen Gehalt von 0 bis 25 Gewichts-% Poly(oxy-1,2-ethylen)-Einheiten bezogen auf das Polyether-Rückgrat enthalten kann, insbesondere an den Kettenenden. Ein Polymer **A** mit einem solchen Rückgrat ist besonders niedrigviskos und somit besonders gut handhabbar und besonders hydrophob. Es ermöglicht Zusammensetzungen mit besonders guter Verarbeitbarkeit, hoher Dehnbarkeit und guter Wasserbeständigkeit.

Ein weiteres bevorzugtes Polymer **A** enthält ein Polyester-Rückgrat, insbesondere abgeleitet von Dicarbonsäuren und Di- oder Triolen, oder von Triglyceriden, oder es sind Polyester auf Basis von Dimer- oder Trimerfettsäuren. Besonders bevorzugt sind Polyester von Dimerfettsäuren oder Polyester abgeleitet von Rizinusöl, Derivaten von Rizinusöl oder Pflanzenölen. Polymere **A** mit einem solchen Rückgrat sind besonders hydrophob und ermöglichen Zusammensetzungen mit besonders guter Beständigkeit gegen Hitze und Wasser. Ausserdem beruhen sie auf nachwachsenden Rohstoffen und sind dadurch potenziell besonders nachhaltig.

Ein besonders bevorzugtes Polymer **A** enthält zusätzlich Urethangruppen. Dies ermöglicht Zusammensetzungen mit hoher Dehnbarkeit.

Bevorzugt ist das Polymer **A** bei Raumtemperatur flüssig. Insbesondere weist es eine Viskosität bei 20 °C von 0.01 bis 700 Pa s, bevorzugt 0.1 bis 500 Pa s, besonders bevorzugt 0.5 bis 200 Pa s, insbesondere 1 bis 100 Pa s, auf, gemessen mittels Kegel-Platte Viskosimeter mit Kegeldurchmesser 10 mm, Kegelwinkel 1°, Kegelspitze-Platte-Abstand 0.05 mm, Scherrate 10 s⁻¹.

Bevorzugt sind die Aldehydgruppen des Polymers **A** direkt an einen aromatischen Ring gebunden. Dies ermöglicht eine besonders schnelle Aushärtung.

Ein besonders bevorzugtes Polymer **A** ist ein bei Raumtemperatur flüssiges Urethangruppen-haltiges Polymer mit einem mittleren Molekulargewicht Mₙ von 2'000 bis 10'000 g/mol und einer mittleren Aldehyd-Funktionalität von 1.8 bis 3.5, bevorzugt 2.0 bis 3.0, insbesondere 2.2 bis 3.0.

Bevorzugt wird ein solches Polymer erhalten aus der Reaktion von mindestens einem Hydroxyaldehyd mit mindestens einem Isocyanatgruppen-haltigen Polymer.

Als Hydroxyaldehyd geeignet ist insbesondere 2-Hydroxyacetaldehyd, 3-Hydroxybutanal, 3-Hydroxypivalaldehyd, 5-Hydroxypentanal, 2-(2-Hydroxyethoxy)acetaldehyd, 3-(2-Hydroxyethoxy)propanal, 5-Hydroxymethylfurfural, alkoxyliertes o-, m- oder p-Hydroxybenzaldehyd oder alkoxyliertes Vanillin, wobei "alkoxyliert" bevorzugt für einfach oder mehrfach ethoxyliert oder propoxyliert steht, sowie 4,4'-(2-Hydroxypropan-1,3-diyl)-bis(oxy)-bis(benzaldehyd) oder 4,4'-(2-Hydroxypropan-1,3-diyl)-bis(oxy)-bis(3-methoxybenzaldehyd).

Davon bevorzugt sind Hydroxyaldehyde, deren Aldehydgruppe direkt an einen aromatischen Ring gebunden ist.

Besonders bevorzugt ist ethoxyliertes Salicylaldehyd, insbesondere 2-(2-Hydroxyethoxy)benzaldehyd, ethoxyliertes Vanillin, insbesondere 4-(2-Hydroxyethoxy)-3-methoxybenzaldehyd, oder 5-Hydroxymethylfurfural.

Ganz besonders bevorzugt ist ethoxyliertes Salicylaldehyd. Damit werden besonders farbstabile Zusammensetzungen erhalten.

Weiterhin ganz besonders bevorzugt ist 5-Hydroxymethylfurfural. Damit werden besonders gut verarbeitbare Zusammensetzungen mit besonders schneller Aushärtung erhalten.

Als Isocyanatgruppen-haltiges Polymer geeignet ist insbesondere ein Reaktionsprodukt aus der Umsetzung von mindestens einem Polyisocyanat mit mindestens einem Polyol, hergestellt nach einem bekannten Verfahren, insbesondere in einem Molverhältnis NCO/OH von mindestens 1.3, bevorzugt mindestens 1.5, insbesondere mindestens 1.8, unter Ausschluss von Feuchtigkeit bei 20 bis 160 °C, insbesondere 40 bis 140 °C, gegebenenfalls in Anwesenheit eines geeigneten Katalysators.

Als Polyisocyanat geeignet ist insbesondere ein Diisocyanat, insbesondere 1,6-Hexandiisocyanat (HDI), Isophorondiisocyanat (IPDI), 4,4'-Diisocyanatodicyclohexylmethan (H₁₂MDI), 4(2),4'-Diphenylmethandiisocyanat (MDI) oder 2,4(6)-Toluendiisocyanat, besonders bevorzugt IPDI.

Als Polyol geeignet sind insbesondere:
- Polyetherpolyole, insbesondere Polymerisationsprodukte von Ethylenoxid, 1,2-Propylenoxid, 1,2-Butylenoxid, 2,3-Butylenoxid, Styroloxid, Oxetan, Tetrahydrofuran oder Mischungen davon, wobei diese mit Hilfe eines Startermoleküls mit zwei oder mehreren aktiven Wasserstoffatomen polymerisiert sein können. Bevorzugt sind Poly(oxy-1,2-propylen)diole oder Polyoxypropylentriole, insbesondere propoxylierts Glycerin oder 1,1,1-Trimethylolpropan, wobei diese jeweils zusätzlich an den Kettenenden ethoxyliert sein können. Sie werden auch als EO-terminierte (EO-endcapped) Poly(oxy-1,2-propylen)diole oder Polyoxypropylentriole bezeichnet. Bevorzugte Polyetherpolyole weisen einen Ungesättigtheitsgrad von weniger als 0.02 mEq/g, insbesondere weniger als 0.01 mEq/g, auf.
- Polyesterpolyole, insbesondere aus der Polykondensation von Hydroxycarbonsäuren bzw. Lactonen oder von aliphatischen und/oder aromatischen Polycarbonsäuren mit zwei- oder mehrwertigen Alkoholen. Bevorzugt sind amorphe, Di- oder Trimerfettsäure-basierte Polyesterpolyole, wie sie kommerziell beispielsweise von der Firma Cargill erhältlich sind.
- Polycarbonatpolyole, erhältlich durch Umsetzung von Diolen mit Dialkylcarbonaten, Diarylcarbonaten oder Phosgen.
- Mindestens zwei Hydroxylgruppen tragende Blockcopolymere, insbesondere Polyetherpolyesterpolyole.
- Polyacrylat- und Polymethacrylatpolyole.
- Polyhydroxyfunktionelle Fette oder Öle, insbesondere natürliche Fette oder Öle wie inbesondere Rizinusöl, ethoxyliertes oder insbesondere propoxyliertes Rizinusöl, Ketonharz-modifiziertes Rizinusöl, oder durch chemische Modifizierung von natürlichen Fetten und Ölen gewonnene, sogenannte oleochemische, Polyole, wie beispielsweise unter dem Handelsnamen Sovermol^{®} (von BASF) erhältliche hydroxylierte Pflanzenöle.
- oder Polykohlenwasserstoffpolyole.

Bevorzugt sind Polyole mit einer OH-Zahl von 9 bis 280 mg KOH/g, bevorzugt 14 bis 150 mg KOH/g, insbesondere 25 bis 115 mg KOH/g.

Bevorzugt sind Polyetherpolyole, insbesondere Poly(oxy-1,2-propylen)diole oder Polyoxypropylentriole, wobei diese gegebenenfalls EO-terminiert sind, und wobei Polyoxypropylentriole bevorzugt gestartet sind auf 1,1,1-Trimethylolpropan oder Glycerin.

Bevorzugt sind Polyetherpolyole mit einem niedrigen Gehalt an Ungesättigtheit (sogenannte "low monol" und "ultra low monol" Polyole), insbesondere von weniger als 0.02 mEq/g, bevorzugt weniger als 0.01 mEq/g.

Weiterhin bevorzugt sind Polyesterpolyole, insbesondere Di- oder Trimerfettsäure-basierte Polyesterpolyole.

Die härtbare Zusammensetzung enthält weiterhin mindestens eine Verbindung B mit aktivierten Methylengruppen der Formel (I), 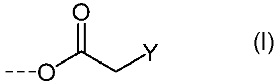 wobei Y für einen Rest der Formel ---CN , 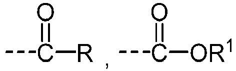 oder 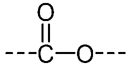 steht.

Bevorzugt steht R für einen Alkylrest mit 1 bis 6 C-Atomen oder für Phenyl, besonders bevorzugt für Methyl, Ethyl, Propyl, Isopropyl, Butyl oder Phenyl. Am meisten bevorzugt steht R für Methyl.

Bevorzugt steht R¹ für Methyl, Ethyl oder tert-Butyl, besonders bevorzugt für Ethyl oder tert-Butyl, insbesondere für Ethyl.

Bevorzugt enthält die Verbindung **B** eine bis sechs aktivierte Methylengruppen der Formel (I), besonders bevorzugt zwei bis vier, insbesondere zwei bis drei, aktivierte Methylengruppen der Formel (I).

Bevorzugt weist die Verbindung **B** ein Molekulargewicht, oder im Fall einer oligomeren oder polymeren Verbindung **B** mittleres Molekulargewicht Mₙ, von 100 bis 10'000 g/mol, bevorzugt 196 bis 5'000 g/mol, besonders bevorzugt 240 bis 2'500 g/mol, insbesondere 240 bis 1'500 g/mol, auf.

Bevorzugt weist die Verbindung **B** in Bezug auf die aktivierten Methylengruppen der Formel (I) ein Equivalentgewicht, oder im Fall einer oligomeren oder polymeren Verbindung **B** mittleres Equivalentgewicht, von 100 bis 2'100 g/eq, bevorzugt 114 bis 600 g/eq, insbesondere 114 bis 400 g/eq, auf.

Bevorzugt weist die Verbindung **B** in Bezug auf die aktivierten Methylengruppen der Formel (I) eine Funktionalität, oder im Fall einer oligomeren oder polymeren Verbindung **B** mittlere Funktionalität, von 1 bis 4, bevorzugt 1.5 bis 4, mehr bevorzugt 1.8 bis 3.5, besonders bevorzugt 2 bis 3, insbesondere 2.3 bis 3, auf.

Insbesondere weist die Verbindung **B** in Bezug auf die aktivierten Methylengruppen der Formel (I) ein Equivalentgewicht, oder im Fall einer oligomeren oder polymeren Verbindung **B** mittleres Equivalentgewicht, von 100 bis 2'100 g/eq, bevorzugt 114 bis 600 g/eq, insbesondere 114 bis 400 g, und eine Funktionalität, oder im Fall einer oligomeren oder polymeren Verbindung **B** mittlere Funktionalität, von 1.5 bis 4, bevorzugt 1.8 bis 3.5, mehr bevorzugt 2 bis 3, insbesondere 2.3 bis 3, auf.

Bevorzugt ist die Verbindung **B** bei Raumtemperatur flüssig. Insbesondere weist sie eine Viskosität bei 20 °C von 0.01 bis 50 Pa s, mehr bevorzugt 0.01 bis 25 Pa s, besonders bevorzugt 0.01 bis 10 Pa s, insbesondere 0.02 bis 5 Pa s, auf, gemessen mittels Kegel-Platte Viskosimeter mit Kegeldurchmesser 10 mm, Kegelwinkel 1°, Kegelspitze-Platte-Abstand 0.05 mm, Scherrate 10 s⁻¹, für Viskositäten von weniger als 0.5 Pa s mit Kegeldurchmesser 50 mm. Eine solche Verbindung ermöglicht Zusammensetzungen, die bei Umgebungstemperatur ohne Zusatz von Lösemitteln oder Verdünnern gut verarbeitbar sind.

Bevorzugt wird die Verbindung **B** erhalten aus der Umesterung von mindestens einer Hydroxylgruppen-haltigen Verbindung mit mindestens einer Verbindung der Formel (II), 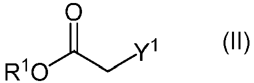 wobei Y¹ für einen Rest der Formel ---CN , 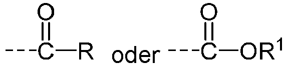 steht und R und R¹ die bereits beschriebenen Bedeutungen aufweisen.

Bevorzugt erfolgt die Umesterung bei einer Temperatur von 50 bis 150 °C unter destillativer Entfernung des freigesetzten Alkohols R¹OH und gegebenenfalls Fragmentierungsprodukten davon, gegebenenfalls unter Vakuum und gegebenenfalls in Anwesenheit von Katalysatoren.

Weiterhin möglich ist die Herstellung einer Verbindung **B** mit Cyanoacetatgruppen durch Veresterung von Cyanoessigsäure mit mindestens einer Hydroxylgruppen-haltigen Verbindung.

Weiterhin möglich ist die Herstellung einer Verbindung **B** mit Acetoacetatgruppen, indem die der Verbindung **B** zugrunde liegende Hydroxylgruppen-haltige Verbindung mit Diketen oder dem Addukt von Diketen mit Aceton (= 2,2,6-Trimethyl-4H-1,3-dioxin-4-on) umgesetzt wird, wobei im Fall des Aceton-Diketen-Addukts Aceton freigesetzt wird.

Weiterhin möglich ist die Herstellung einer Verbindung **B** mit Malonatgruppen durch Veresterung von Malonsäure mit mindestens einer Hydroxylgruppen-haltigen Verbindung.

Als Verbindung der Formel (II) geeignet ist insbesondere Methylcyanoacetat, Ethylcyanoacetat, tert-Butylcyanoacetat, Methylacetoacetat, Ethylacetoacetat, tert-Butylacetoacetat, Ethyl-3-oxohexanoat, Ethylbenzoylacetat, Malonsäuredimethylester, Malonsäurediethylester, Malonsäurediisopropylester oder Malonsäuredi-(tert-butylester).

Bevorzugt ist Ethylcyanoacetat oder tert-Butylcyanoacetat, Ethylacetoacetat oder tert-Butylacetoacetat, sowie Malonsäurediethylester.

Als Hydroxylgruppen-haltige Verbindung bevorzugt sind handelsübliche OH-funktionelle Verbindungen oder Polymere, wie insbesondere 1,2-Ethandiol, Diethylenglykol, Triethylenglykol, 1,2-Propandiol, Dipropylenglykol, Tripropylenglykol, 1,3-Propandiol, 1,4-Butandiol, 1,2-Butandiol, 2-Methyl-1,3-propandiol, 1,5-Pentandiol, 1,2-Pentandiol, Neopentylglykol, 2-Methyl-1,4-butandiol, 1,6-Hexandiol, 3-Methyl-1,5-pentandiol, 1,8-Octandiol, 1,10-Decandiol, 1,12-Dodecandiol, Polytetrahydrofurandiole, 1,3-Cyclohexandimethanol, 1,4-Cyclohexandimethanol, 1,1,1-Trimethylolethan, 1,1,1-Trimethylolpropan, Glycerin, Pentaerythrit, propoxyliertes und/oder ethoxyliertes Glycerin mit mittlerem Molekulargewicht Mₙ von 300 bis 6'000 g/mol, propoxyliertes und/oder ethoxyliertes 1,1,1-Trimethylolpropan mit mittlerem Molekulargewicht Mₙ von 300 bis 6'000 g/mol, Poly(oxy-1,2-propylen)diole mit mittlerem Molekulargewicht von 400 bis 4'000 g/mol, EO-terminierte Poly(oxy-1,2-propylen)diole mit mittlerem Molekulargewicht von 1'000 bis 4'000 g/mol, Poly(oxy-1,2-propylen)triole mit mittlerem Molekulargewicht von 400 bis 6'000 g/mol, EO-terminierte Poly(oxy-1,2-propylen)triole mit mittlerem Molekulargewicht von 3'000 bis 6'000 g/mol, Di- oder Trimerfettsäure-basierte Polyesterpolyole mit mittlerem Molekulargewicht von 1'000 bis 3'000 g/mol, Rizinusöl, Derivate von Rizinusöl oder hydroxylierte Pflanzenöle.

In einer bevorzugten Ausführungsform der Erfindung steht Y für einen Rest der Formel ---CN und die aktivierten Methylengruppen der Formel (I) sind somit Cyanoacetatgruppen.

Bevorzugt ist eine Verbindung **B** mit Cyanoacetatgruppen ausgewählt aus der Liste bestehend aus dem Tricyanoacetat von ethoxyliertem und/oder propoxyliertem 1,1,1-Trimethylolpropan, dem Tricyanoacetat von ethoxyliertem und/oder propoxyliertem Glycerin, Poly(oxy-1,2-propylen)diol-bis(cyanoacetat), Ethylenoxid-Einheiten enthaltendem Poly(oxy-1,2-propylen)diol-bis(cyanoacetat), Dimerfettsäure-basiertem Polyesterdiol-bis(cyanoacetat) und Trimerfettsäure-basiertem Polyestertriol-tris(cyanoacetat).

Besonders bevorzugt ist das Tricyanoacetat von propoxyliertem 1,1,1-Trimethylolpropan) mit insgesamt einem mittleren Molekulargewicht Mₙ von 500 bis 750 g/mol.

In einer besonders bevorzugten Ausführungsform der Erfindung steht Y in der Formel (I) für einen Rest der Formel 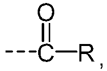 wobei R bevorzugt für Methyl steht und die aktivierten Methylengruppen der Formel (I) somit Acetoacetatgruppen sind. Solche Verbindungen **B** sind besonders einfach verfügbar und ermöglichen besonders farbstabile Zusammensetzungen mit besonders guter Verarbeitbarkeit.

Bevorzugt ist eine Verbindung **B** mit Acetoacetatgruppen ausgewählt aus der Liste bestehend aus 1,2-Propandioldiacetoacetat, Dipropylenglykoldiacetoacetat, Tripropylenglykoldiacetoacetat, 1,3-Propandioldiacetoacetat, 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat, dem Triacetoacetat von propoxyliertem und/oder ethoxyliertem 1,1,1-Trimethylolpropan, Polytetrahydrofuran-diacetoacetat mit mittlerem Molekulargewicht Mₙ von 350 bis 2'000 g/mol, dem Triacetoacetat von propoxyliertem und/oder ethoxyliertem 1,1,1-Trimethylolpropan mit insgesamt einem mittleren Molekulargewicht Mₙ von 500 bis 1'000 g/mol, Poly(oxy-1,2-propylen)diol-bis(acetoacetat), Ethylenoxid-Einheiten enthaltendem Poly(oxy-1,2-propylen)diol-bis(acetoacetat), Rizinusöl-bis(acetoacetat), Rizinusöl-tris(acetoacetat), Dimerfettsäure-basiertem Polyesterdiol-bis(acetoacetat) und Trimerfettsäure-basiertem Polyestertriol-tris(acetoacetat).

Davon bevorzugt ist 1,2-Propandioldiacetoacetat, Dipropylenglykoldiacetoacetat, Neopentylglykoldiacetoacetat, Glycerin-diacetoacetat, Glycerin-triacetoacetat, 1,1,1-Trimethylolpropan-diacetoacetat, 1,1,1-Trimethylolpropan-triacetoacetat oder ein Triacetoacetat von propoxyliertem 1,1,1-Trimethylolpropan mit insgesamt einem mittleren Molekulargewicht Mₙ von 500 bis 1'000 g/mol.

In einer weiteren Ausführungsform der Erfindung steht Y für einen Rest der Formel 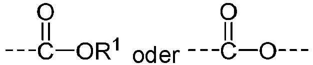 und die aktivierten Methylengruppen der Formel (I) sind somit Malonatgruppen.

Bevorzugt ist eine Verbindung **B** mit Malonatgruppen ausgewählt aus der Liste bestehend aus Malonsäurediethylester, Malonsäurediisopropylester, 1,2-Ethandiol-bis(ethylmalonat), 1,2-Propandiol-bis(ethylmalonat), 1,3-Propandiol-bis(ethylmalonat), 1,4-Butandiol-bis(ethylmalonat), 1,6-Hexandiol-bis(ethylmalonat), 1,4-Cyclohexandimethanol-bis(ethylmalonat), Diethylenglykol-bis(ethylmalonat), Dipropylenglykol-bis(ethylmalonat), Glycerin-tris(ethylmalonat), 1,1,1-Trimethylolpropan-tris(ethylmalonat), Rizinusöl-tris(ethylmalonat), Poly(oxy-1,2-propylen)diolbis(ethylmalonat) mit mittlerem Molekulargewicht Mₙ von 500 bis 2'000 g/mol, propoxyliertem 1,1,1-Trimethylolpropan mit drei Ethylmalonat-Endgruppen und einem mittleren Molekulargewicht Mₙ von 650 bis 2'500 g/mol, entsprechende oligomere Verbindungen dieser Umsetzungsprodukte, sowie Malonatgruppen enthaltende Polyesterdiole aus der Umsetzung von Diolen wie 1,6-Hexandiol und 1,4-Cyclohexandimethanol mit Malonsäure und Malonsäurediethylester und gegebenenfalls Adipinsäure oder Adipinsäurediethylester.

Geeignete Verbindungen mit Malonatgruppen sind auch kommerziell erhältlich, insbesondere als Acure^{®} 510-200 (von Allnex).

In einer bevorzugten Ausführungsform der Erfindung beträgt die mittlere Funktionalität der gesamten härtbaren Zusammensetzung in Bezug auf die Reaktivgruppen Aldehyd- und aktivierte Methylengruppen der Formel (I) mindestens 2.2. Das heisst, eine härtbare Zusammensetzung mit mittlerer Aldehyd-Funktionalität von beispielsweise 1.8 weist bevorzugt eine mittlere Funktionalität in Bezug auf die aktivierten Methylengruppen der Formel (I) von mindestens 2.4 auf, um insgesamt eine mittlere Reaktivgruppen-Funktionalität von mindestens 2.2 zu erreichen. Eine solche Zusammensetzung ermöglicht eine besonders hohe Festigkeit bei hoher Dehnbarkeit.

Die härtbare Zusammensetzung enthält weiterhin mindestens einen Beschleuniger **C** enthaltend mindestens eine sekundäre Aminogruppe.

Geeignet als Beschleuniger **C** ist insbesondere ein sekundäres Amin, welches frei ist von primären Amingruppen.

Geeignet als Beschleuniger **C** sind insbesondere Dimethylamin, Diethylamin, Dipropylamin, Diisopropylamin, Dibutylamin, Diisobutylamin, Di-sek.-butylamin, Di(2-ethylhexyl)amin, N-Methylbutylamin, N-Ethylbutylamin, Di(2-methoxyethyl)amin, Diethanolamin, N-Methylethanolamin, N-Ethylethanolamin, N-Methylcyclohexylamin, N-Ethyl-cyclohexylamin, Piperidin, Pyrrolidin, Morpholin, N,N'-Dimethyl-1,3-propandiamin, N,N'-Diethyl-1,3-propandiamin, N,N'-Dibenzyl-1,2-ethandiamin, Piperazin, N-Methylpiperazin, N-Ethylpiperazin, N-Hydroxyethylpiperazin, Imidazolidin, N-Methylimidazolidin, Prolin oder Imidazol.

Bevorzugt ist ein Beschleuniger **C** enthaltend mindestens eine cyclische sekundäre Aminogruppe, also eine sekundäre Aminogruppe, deren zwei organische Reste Teil eines Rings sind, wie insbesondere Piperidin, Pyrrolidin, Morpholin, Piperazin, N-Methylpiperazin, N-Ethylpiperazin, N-Hydroxyethylpiperazin, Imidazolidin, N-Methylimidazolidin, Prolin oder Imidazol.

Weiterhin bevorzugt ist ein Beschleuniger **C** mit geringer Basizität. Insbesondere weist der Beschleuniger **C** einen pKa Wert der konjugierten Säure von weniger als 11, bevorzugt weniger als 10, insbesondere weniger als 9, auf.

Besonders bevorzugt ist ein Beschleuniger **C** enthaltend mindestens eine cyclische sekundäre Aminogruppe mit einem pKa Wert der konjugierten Säure von weniger als 11, bevorzugt weniger als 10, insbesondere weniger als 9.

Besonders bevorzugte Beschleuniger **C** sind N-Methylethanolamin, Morpholin, Piperazin, N-Methylpiperazin, N-Ethylpiperazin, Prolin oder Imidazol.

Ganz besonders bevorzugt als Beschleuniger **C** ist Morpholin. Damit werden bei langer Verarbeitbarkeit und schneller, störungsfreier Aushärtung besonders gute mechanische Eigenschaften in Bezug auf Dehnung und Weiterreisswiderstand erhalten, insbesondere mit Polyacetoacetaten als Verbindung **B** bei einem Verhältnis der Anzahl Acetoacetatgruppen zur Anzahl Aldehydgruppen von 0.9 bis 1.2.

Bevorzugt wird der Beschleuniger **C** in einer Menge von 0.1 bis 8 Gewichtsteilen, bevorzugt 0.5 bis 5 Gewichtsteilen, bezogen auf 100 Gewichtsteile der Summe aus Polymer **A** und Verbindung **B** eingesetzt.

Bei der Aushärtung wird überraschenderweise beobachtet, dass die Anwesenheit des Beschleunigers **C** im Vergleich mit andern Stickstoff-haltigen Beschleunigern wie beispielsweise DBU eine besonders hohe Dehnbarkeit und einen besonders hohen Weiterreisswiderstand ermöglicht. Dieser Effekt ist besonders ausgeprägt im Fall von Acetoacetatgruppen oder Malonatgruppen als aktivierte Methylengruppen der Formel (I), insbesondere mit Acetoacetatgruppen. Ganz besonders ausgeprägt ist dieser Effekt bei einem Verhältnis der Anzahl Acetoacetatgruppen zur Anzahl Aldehydgruppen von 0.9 bis 1.5, insbesondere 0.9 bis 1.2. Dabei wird eine ganz besonders hohe Dehnbarkeit und ein ganz besonders hoher Weiterreisswiderstand ermöglicht.

Die härtbare Zusammensetzung kann zusätzlich weitere Bestandteile enthalten, insbesondere
- Füllstoffe, insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Kieselsäure, Kieselsäure-Kaolinite, calcinierte Kieselsäure-Kaolinite, Schichtsilikate wie Glimmer oder Talk, Zeolithe, Aluminiumhydroxide, Magnesiumhydroxide, hochdisperse Kieselsäuren aus Pyrolyseprozessen, industriell hergestellte Russe, Graphit, Metall-Pulver, beispielsweise von Aluminium, Kupfer, Eisen, Silber oder Stahl, PVC-Pulver oder Hohlkugeln;
- Fasern, insbesondere Glasfasern, Kohlefasern, Metallfasern, Keramikfasern, Hanffasern, Zellulosefasern oder Kunststofffasern wie Polyamidfasern oder Polyethylenfasern;
- Nanofüllstoffe oder Nanofasern wie Graphen oder Carbon Nanotubes;
- Farbstoffe;
- Pigmente, insbesondere Titandioxid, Chromoxid, Eisenoxide oder organische Pigmente;
- Weichmacher, insbesondere Phthalate, insbesondere Diisononylphthalat (DINP), Diisodecylphthalat (DIDP) oder Di(2-propylheptyl)phthalat (DPHP), hydrierte Phthalate, insbesondere Diisononyl-1,2-cyclohexandicarboxylat (DINCH), Terephthalate, insbesondere Bis(2-ethylhexyl)terephthalat oder Diisononylterephthalat (DINT), hydrierte Terephthalate, insbesondere Bis(2-ethylhexyl)-1,4-cyclohexandicarboxylat oder Diisononyl-1,4-cyclohexandicarboxylat, Isophthalate, Trimellitate, Adipate, insbesondere Dioctyladipat (DOA), Azelate, Sebacate, Benzoate, Glycolether, Glycolester, Weichmacher mit Polyetherstruktur, insbesondere Polypropylenoxid-monole, -diole oder -triole, oder Polypropylenoxid-monole, -diole oder -triole mit blockierten Hydroxylgruppen, insbesondere in der Form von Acetatgruppen, sowie organische Sulfonate oder Phosphate, insbesondere Diphenylkresylphosphat (DPK) oder Tris-2-ethylhexylphosphat (TOF), Polybutene, Polyisobutene oder von natürlichen Fetten oder Ölen abgeleitete Weichmacher, insbesondere epoxidiertes Soja- oder Leinöl oder Rapsölmethylester, wobei Phthalate, hydrierte Phthalate, Adipate oder Weichmacher mit Polyetherstruktur bevorzugt sind;
- Lösemittel;
- Modifizierungsmittel wie Kohlenwasserstoffharze, natürliche oder synthetische Wachse oder Bitumen;
- Rheologie-Modifizierer, insbesondere Harnstoffverbindungen, Schichtsilikate wie Bentonite, Derivate von Rizinusöl, hydriertes Rizinusöl, Polyamide, Polyurethane, pyrogene Kieselsäuren oder hydrophob modifizierte Polyoxyethylene;
- Trocknungsmittel, insbesondere Molekularsiebe, Calciumoxid, Mono-Oxazolidine wie Incozol^{®} 2 (von Incorez), Orthoester oder Alkoxysilane;
- Haftvermittler, insbesondere Titanate oder Organoalkoxysilane wie Epoxysilane, Mercaptosilane, (Meth)acrylsilane, Carbamatosilane, Alkylsilane, S-(Alkylcarbonyl)mercaptosilane oder oligomere Formen dieser Silane;
- nicht-reaktive thermoplastische Polymere, wie Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- flammhemmende Substanzen, insbesondere die bereits genannten Füllstoffe Aluminiumhydroxid oder Magnesiumhydroxid, organische Phosphorsäureester, Ammoniumpolyphosphate, Melamin oder Derivate davon, Borverbindungen oder Antimonverbindungen;
- Additive, insbesondere Netzmittel, Verlaufmittel, Entschäumer, Entlüfter, Stabilisatoren gegen Oxidation, Wärme, Licht oder UV-Strahlung oder Biozide;
sowie weitere üblicherweise in härtbaren Zusammensetzungen eingesetzte Substanzen.

Bevorzugt enthält die härtbare Zusammensetzung mindestens einen weiteren Bestandteil ausgewählt aus Weichmachern, Füllstoffen und Haftvermittlern. Bevorzugt enthält die härtbare Zusammensetzung mehrere solche weitere Bestandteile.

In einer bevorzugten Ausführungsform der Erfindung enthält die härtbare Zusammensetzung bezogen auf die gesamte Zusammensetzung 10 bis 95 Gewichts-%, bevorzugt 20 bis 90 Gewichts-%, insbesondere 30 bis 80 Gewichts-%, Füllstoffe. Bevorzugt sind Füllstoffe ausgewählt aus Calciumcarbonaten, beschichteten Calciumcarbonaten, Quarzmehl, Quarzsand, Kaolin, calciniertem Kaolin, Kieselsäure, Kieselsäure-Kaolinit, calciniertem Kieselsäure-Kaolinit, Aluminiumhydroxid, Titandioxid und Russ. Eine solche Zusammensetzung ist besonders geeignet für Anwendungen in Schichtdicken von mindestens 1 mm, bevorzugt 1 bis 50 mm, insbesondere 1.5 bis 25 mm. Dabei zeigt die ausgehärtete Zusammensetzung ausgeprägt elastische Eigenschaften.

In einer weiteren bevorzugten Ausführungsform der Erfindung enthält die härtbare Zusammensetzung bezogen auf die gesamte Zusammensetzung 5 bis 80 Gewichts-%, insbesondere 10 bis 60 Gewichts-%, Weichmacher. Bevorzugt sind Weichmacher ausgewählt aus DINP, DIDP, DPHP, DINCH, Bis(2-ethylhexyl)-terephthalat, DINT, Bis(2-ethylhexyl)-1,4-cyclohexandicarboxylat, Diisononyl-1,4-cyclohexandicarboxylat, DOA, Polypropylenoxidmonolen, Polypropylenoxiddiolen, Polypropylenoxidtriolen, Polypropylenoxidmonol-acetaten, Polypropylenoxiddioldiacetaten, Polypropylenoxidtrioltriacetaten und DPK.

Besonders bevorzugt enthält die härtbare Zusammensetzung Füllstoffe und Weichmacher, insbesondere bezogen auf die gesamte Zusammensetzung 10 bis 95 Gewichts-%, bevorzugt 20 bis 90 Gewichts-%, insbesondere 30 bis 80 Gewichts-%, Füllstoffe und 5 bis 80 Gewichts-%, insbesondere 10 bis 60 Gewichts-%, Weichmacher.

Die härtbare Zusammensetzung enthält bezogen auf die gesamte Zusammensetzung bevorzugt weniger als 10 Gewichts-%, besonders bevorzugt weniger als 5 Gewichts-%, insbesondere weniger als 1 Gewichts-%, flüchtige organische Verbindungen (VOC) mit einem Siedepunkt bei Normaldruck von weniger als 250 °C, insbesondere organische Lösemittel. Eine solche Zusammensetzung verursacht besonders wenig Emissionen.

Die härtbare Zusammensetzung enthält bevorzugt weniger als 0.5 Gewichts-%, besonders bevorzugt weniger als 0.1 Gewichts-%, insbesondere weniger als 0.05 Gewichts-%, Wasser bezogen auf die gesamte Zusammensetzung.

Bevorzugt umfasst die härtbare Zusammensetzung bezogen auf die gesamte Zusammensetzung
- 5 bis 99 Gewichts-%, bevorzugt 5 bis 90 Gewichts-%, insbesondere 10 bis 70 Gewichts-%, der Summe aus Verbindungen **A** und **B,**
- 0 bis 50 Gewichts-%, bevorzugt 10 bis 40 Gewichts-%, Weichmacher,
- 0 bis 90 Gewichts-%, bevorzugt 20 bis 80 Gewichts-%, Füllstoffe,
- mindestens einen Beschleuniger **C,**
- und gegebenenfalls weitere Substanzen.

Bevorzugt ist die härtbare Zusammensetzung als Mehrkomponentensystem, insbesondere als Zweikomponentensystem, formuliert.

Bevorzugt umfasst die härtbare Zusammensetzung eine Komponente **K1** und eine Komponente **K2,** welche jeweils für sich allein lagerstabil sind und in voneinander getrennten Gebinden gelagert werden. Zum Gebrauch der Zusammensetzung werden die beiden Komponenten **K1** und **K2** kurz vor oder während der Applikation miteinander vermischt, womit die Aushärtung beginnt.

In einer bevorzugten Ausführungsform der Erfindung ist das Polymer **A** Bestandteil der Komponente **K1,** Verbindungen **B** sind Bestandteil der Komponente **K2** und Beschleuniger **C** sind Bestandteil der Komponente **K1** oder **K2.** Bevorzugt sind Beschleuniger **C** dabei Bestandteil der Komponente **K1.** Weitere Bestandteile der härtbaren Zusammensetzung wie Füllstoffe oder Weichmacher können dabei als Bestandteil der Komponente **K1** und/oder **K2** vorhanden sein.

In einer weiteren bevorzugten Ausführungsform der Erfindung sind das Polymer **A** und Verbindungen **B** Bestandteil der Komponente **K1** und Beschleuniger **C** sind Bestandteil der Komponente **K2.** Eine solche Komponente **K2** kann auch als Beschleunigerkomponente bezeichnet werden. Weitere Bestandteile der härtbaren Zusammensetzung wie Füllstoffe oder Weichmacher können dabei als Bestandteil der Komponente **K1** und/oder **K2** vorhanden sein.

Eine solche Komponente **K1** enthaltend das Polymer **A** mit Aldehydgruppen und Verbindungen **B** mit aktivierten Methylengruppen der Formel (I) ist in einer geeigneten Verpackung überraschenderweise lagerstabil. Eine solche Komponente **K1** enthält bevorzugt einen Grossteil oder die Gesamtheit der Füllstoffe und Weichmacher. Dadurch, dass in einer solchen Komponente **K1** die an der Aushärtung beteiligten Reaktivgruppen Aldehyd- und aktivierte Methylengruppen der Formel (I) in der vorgegebenen Stöchiometrie enthalten sind, ist die Aushärtung nur wenig abhängig vom Mischungsverhältnis mit der Komponente **K2** bzw. der Beschleunigerkomponente.

Die Konsistenz der Komponenten ist vorzugsweise so, dass die Komponenten bei Umgebungsbedingungen mit einfachen Verfahren gut miteinander vermischt werden können. Dazu sind insbesondere flüssige oder pastöse Komponenten geeignet. Bevorzugt weisen die Komponenten eine ähnliche Viskosität und/oder Rheologie auf. Solche Komponente sind besonders einfach miteinander mischbar.

Die Komponenten **K1** und **K2** der härtbaren Zusammensetzung werden getrennt voneinander hergestellt. Dabei werden die Inhaltsstoffe der jeweiligen Komponente miteinander vermischt, so dass eine makroskopisch homogene Flüssigkeit oder Paste entsteht. Die Komponenten **K1** und **K2** werden jeweils in einem separaten Gebinde gelagert. Geeignete Gebinde sind insbesondere Fässer, Container, Hobbocks, Eimer, Kanister, Dosen, Beutel, Schlauchbeutel, Kartuschen oder Tuben.

Zur Anwendung der härtbaren Zusammensetzung werden alle Inhaltsstoffe, insbesondere als Komponenten **K1** und **K2,** kurz vor oder während der Applikation miteinander vermischt, wobei das Mischungsverhältnis bevorzugt so gewählt wird, dass das Verhältnis der Anzahl aktivierte Methylengruppen der Formel (I) zur Anzahl Aldehydgruppen im bevorzugten Bereich liegt. In Gewichtsteilen liegt das Mischungsverhältnis bevorzugt bei 100/0.1 bis 1/1, insbesondere 100/0.5 bis 2/1. Das Mischen erfolgt bevorzugt bei Umgebungstemperatur, insbesondere bei einer Temperatur von -5 bis 50 °C, bevorzugt 0 bis 40 °C, insbesondere 5 bis 35 °C.

Das Vermischen der Komponenten erfolgt mittels eines geeigneten Verfahrens, insbesondere mittels Statikmischer oder einem dynamischen Mischer. Das Vermischen kann kontinuierlich oder batchweise erfolgen.

Werden die Komponenten vor der Applikation miteinander vermischt, so muss darauf geachtet werden, dass zwischen dem Vermischen der Komponenten und der Applikation nicht zu viel Zeit vergeht, da es sonst durch die einsetzende Reaktion und den damit verbundenen Anstieg der Viskosität zu Störungen wie beispielsweise einem ungenügenden Verlauf oder einer verlangsamten oder unvollständigen Haftungsaufbau zum Substrat kommen kann. Insbesondere soll die Offenzeit der Zusammensetzung während der Applikation nicht überschritten werden.

Als "Offenzeit" wird dabei die Zeitspanne zwischen dem Vermischen der Komponenten und dem Ende eines für die Verarbeitung geeigneten Zustands der Zusammensetzung bezeichnet. Die Offenzeit kann auch als "Verarbeitungszeit" bezeichnet werden. Die Zeit bis zur Ausbildung einer klebfreien Oberfläche ("tackfree time") stellt dabei ein Mass für die Offenzeit dar.

Ein sehr asymmetrisches Mischungsverhältnis mit einem geringen Anteil der Komponente **K2** erlaubt das Einmischen der Komponente **K2** über einen auf die verpackte Komponente **K1** aufgeschraubten Dosieraufsatz, beispielsweise vom Typ SikaBooster^{®}. Dabei wird die im Dosieraufsatz enthaltene Komponente **K2** bei der Applikation durch einen Drehmechanismus aus dem Dosieraufsatz gefördert und durch einen kurzen Statikmischer mit der Komponente **K1** vermischt, wodurch schliesslich die vermischte härtbare Zusammensetzung appliziert wird. Diese Art der Anwendung ist insbesondere für eine härtbare Zusammensetzung geeignet, bei welcher die Komponente **K1** das Polymer **A** und die Verbindungen **B** enthält und mit einer sogenannten Beschleunigerkomponente enthaltend den Beschleuniger **C** als Komponente **K2** ausgehärtet wird, da dabei lokale Abweichungen vom angestrebten Mischungsverhältnis bei der Applikation aufgrund der in Komponente **K1** vorgegebenen Stöchiometerie der Aushärtungsreaktion gut tolerierbar sind.

Mit dem Vermischen der Inhaltsstoffe oder Komponenten beginnt die Zusammensetzung durch die einsetzende chemische Reaktion auszuhärten. Dabei reagieren die aktivierten Methylengruppen der Formel (I) mit den Aldehydgruppen, wodurch die Zusammensetzung zuverlässig und störungsfrei zu einem festen, polymeren Material aushärtet.

Bei der Aushärtung wird überraschenderweise beobachtet, dass die Anwesenheit des Beschleunigers **C** im Vergleich mit andern Stickstoff-haltigen Beschleunigern wie beispielsweise DBU eine besonders hohe Dehnbarkeit und einen besonders hohen Weiterreisswiderstand ermöglicht. Dieser Effekt ist besonders ausgeprägt im Fall von Acetoacetatgruppen oder Malonatgruppen als aktivierte Methylengruppen der Formel (I), insbesondere mit Acetoacetatgruppen. Ganz besonders ausgeprägt ist dieser Effekt bei einem Verhältnis der Anzahl Acetoacetatgruppen zur Anzahl Aldehydgruppen von 0.9 bis 1.5, insbesondere 0.9 bis 1.2. Dabei wird eine ganz besonders hohe Dehnbarkeit und ein ganz besonders hoher Weiterreisswiderstand ermöglicht, insbesondere mit Morpholin als Beschleuniger **C.**

Ein weiterer Gegenstand der Erfindung ist ein Verfahren zum Aushärten der härtbaren Zusammensetzung, wobei die Inhaltsstoffe oder Komponenten miteinander vermischt werden und die vermischte Zusammensetzung auf mindestens ein Substrat appliziert wird und aushärtet.

Bevorzugt erfolgt die Aushärtung bei Umgebungsbedingungen, insbesondere bei einer Temperatur im Bereich von - 5 bis 50 °C, bevorzugt 0 bis 40 °C, insbesondere 5 bis 35 °C.

Geeignete Substrate, auf welche die vermischte härtbare Zusammensetzung appliziert wird, sind insbesondere
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Isoliermaterialen, insbesondere Schäume, insbesondere aus EPS, XPS, PUR, PIR, Aerogel oder geschäumtes Glas (Foamglas), oder Fasern aus Steinwolle oder Glaswolle,
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Ein weiterer Gegenstand der Erfindung ist die ausgehärtete Zusammensetzung erhalten aus dem Verfahren zum Aushärten der härtbaren Zusammensetzung, wobei die Inhaltsstoffe oder Komponenten miteinander vermischt werden und die vermischte Zusammensetzung auf mindestens ein Substrat appliziert wird und aushärtet.

Bevorzugt ist die ausgehärtete Zusammensetzung elastisch und weist eine hohe Festigkeit bei hoher Dehnbarkeit und hohem Weiterreisswiderstand auf. Bevorzugt weist die ausgehärtete Zusammensetzung eine Bruchdehnung von mindestens 100 %, bevorzugt mindestens 150 %, insbesondere mindestens 200 %, auf, bestimmt gemäss DIN EN 53504 bei einer Zuggeschwindigkeit von 200 mm/min an hantelförmigen Prüfkörpern (Dicke 2 mm, Länge 75 mm, Steglänge 30 mm, Stegbreite 4 mm).

Bevorzugt weist die ausgehärtete Zusammensetzung einen Weiterreisswiderstand von mindestens 4 N/mm, insbesondere mindestens 5 N/mm, auf, bestimmt gemäss DIN ISO 34-1 Verfahren B (winkelförmiger Prüfkörper) bei einer Probendicke von 2 mm und einer Zuggeschwindigkeit von 500 mm/min.

Bevorzugt weist die ausgehärtete Zusammensetzung eine Zugfestigkeit von mindestens 2 MPa, bevorzugt mindestens 3 MPa, insbesondere mindestens 4 MPa, auf, bestimmt gemäss DIN EN 53504 bei einer Zuggeschwindigkeit von 200 mm/min an hantelförmigen Prüfkörpern (Dicke 2 mm, Länge 75 mm, Steglänge 30 mm, Stegbreite 4 mm).

Weiterhin verfügt die ausgehärtete Zusammensetzung über eine gute Beständigkeit gegen Hitze und Wasser. Bevorzugt zeigt die ausgehärtete Zusammensetzung auch nach einer Lagerung während 7 Tagen bei 100 °C oder bei 70 °C und 100 % relativer Feuchtigkeit eine hohe Festigkeit und Dehnbarkeit.

Die beschriebene Zusammensetzung eignet sich für eine Vielzahl von Verwendungen. Sie kann verwendet werden als Klebstoff, Dichtstoff, Beschichtung, Giessharz oder Spachtelmasse, insbesondere als elastischer Klebstoff, elastischer Dichtstoff oder elastische Beschichtung.

Ein weiterer Gegenstand der Erfindung ist die Verwendung der härtbaren Zusammensetzung als elastischer Klebstoff, elastischer Dichtstoff oder elastische Beschichtung, wobei die Inhaltsstoffe oder Komponenten miteinander vermischt werden und die vermischte Zusammensetzung im flüssigen Zustand auf mindestens ein Substrat appliziert wird.

Bei der Verwendung als elastischer Klebstoff, elastischer Dichtstoff oder elastische Beschichtung beträgt die Schichtdicke der ausgehärteten Zusammensetzung bevorzugt mindestens 1 mm, bevorzugt 1 bis 50 mm, insbesondere 1.5 bis 25 mm.

Aus der Verwendung der härtbaren Zusammensetzung wird ein Artikel erhalten. Der Artikel ist insbesondere mit der Zusammensetzung verklebt, abgedichtet oder beschichtet. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut oder ein Anbauteil davon sein, insbesondere ein Fenster, ein Rohr, ein Rotorblatt einer Windkraftanlage, eine Haushaltmaschine oder ein Verkehrsmittel wie insbesondere ein Automobil, ein Bus, ein Lastkraftwagen, ein Schienenfahrzeug, ein Schiff, ein Flugzeug oder ein Helikopter.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

Die **Viskosität** wurde auf einem thermostatisierten Kegel-Platten-Viskosimeter Rheotec RC30 (Kegeldurchmesser 10 mm, Kegelwinkel 1°, Kegelspitze-PlattenAbstand 0.05 mm, Scherrate 10 s⁻¹) gemessen. Viskositäten von weniger als 1 Pa s wurden mit einem Kegeldurchmesser von 50 mm gemessen.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

Der **Gehalt an monomerem Diisocyanat** wurde mittels HPLC (Detektion über Photodiodenarray; 0.04 M Natriumacetat / Acetonitril als mobile Phase) nach vorgäniger Derivation mittels N-Propyl-4-nitrobenzylamin bestimmt.

### Herstellung von Polymeren mit Aldehydgruppen:

### Polymer A-1:

500 g des Isocyanatgruppen-haltigen **Polymer-1** (NCO-Gehalt 1.84 Gewichts-%, Basis IPDI, hergestellt wie nachfolgend beschrieben) wurden in Gegenwart von 0.1 g Dibutylzinndilaurat unter Ausschluss von Feuchtigkeit bei 110 °C mit 27.7 g 5-Hydroxymethylfurfural umgesetzt, bis mittels IR-Spektroskopie keine Isocyanatgruppen mehr nachweisbar waren. Erhalten wurde eine klare, farblose Flüssigkeit mit einer Viskosität von 63.7 Pa s bei 20 °C, einer mittleren Aldehyd-Funktionalität von ca. 2.3 und einem theoretischen Aldehyd-Equivalentgewicht von 2381 g/eq. Das mittlere Molekulargewicht Mₙ betrug 6'100 g/mol, bestimmt mittels Gelpermeationschromatographie (GPC) gegen Polystyrol (474 bis 2'520'000 g/mol) als Standard, mit Tetrahydrofuran als mobile Phase und Brechungsindex-Detektor.

Das Isocyanatgruppen-haltige **Polymer-1** wurde hergestellt, indem 780 g Ethylenoxid-terminiertes Polyoxypropylentriol (Desmophen^{®} 5031 BT, OH-Zahl 28.0 mg KOH/g, OH-Funktionalität ca. 2.3, von Covestro) mit 303 g Isophorondiisocyanat (Vestanat^{®} IPDI, von Evonik) bei 80 °C nach bekanntem Verfahren zu einer Reaktionsmischung mit einem NCO-Gehalt von 9.1 Gewichts-% umgesetzt wurden und anschliessend die flüchtigen Bestandteile, insbesondere nicht umgesetztes Isophorondiisocyanat, in einem Kurzwegverdampfer destillativ entfernt wurden (Manteltemperatur 160 °C, Druck 0.1 bis 0.005 mbar), wobei ein Polymer mit einem NCO-Gehalt von 1.84 Gewichts-% und einem Gehalt an monomerem Isophorondiisocyanat von 0.02 Gewichts-% erhalten wurde.

### Herstellung von Verbindungen mit aktivierten Methylengruppen der Formel (I):

### Verbindung B-1:

50 g eines Polyoxypropylentriols (Desmophen^{®} 4011 T, OH-Zahl 550 mg KOH/g, propoxyliertes 1,1,1-Trimethylolpropan, von Covestro) wurden mit 67 g Ethylacetoacetat und 0.1 g Tetra-n-butyltitanat (Tyzor^{®} TnBT, von Dorf Ketal) versetzt und unter Vakuum und Entfernung der flüchtigen Bestandteile bei einer Temperatur von 80 bis 140 °C umgesetzt. Erhalten wurde eine klare, farblose Flüssigkeit mit einer Viskosität von 0.8 Pa s bei 20 °C, einer mittleren Acetoacetat-Funktionalität von 3 und einem theoretischen Acetoacetat-Equivalentgewicht von 186 g/eq.

### Herstellung von härtbaren Zusammensetzungen:

### Beispiele Z-1 bis Z-14:

Für jedes Beispiel wurden die in den Tabellen 1 bis 3 angegebenen Inhaltsstoffe der ersten Komponente **K1** in den angegebenen Mengen (in Gewichtsteilen) vermischt und in einem verschlossenen Gebinde aufbewahrt.

Der Inhaltsstoff der zweiten Komponente **K2** wurde in der in den Tabellen 1 bis 3 angegebenen Menge eingesetzt.

Als "CaCOs gefällt" wurde Socal^{®} U1S2 (von Imerys), ein gefälltes und mit Stearat beschichtetes Calciumcarbonat, eingesetzt.

Als "Russ" wurde Monarch^{®} 570 (von Cabot) eingesetzt.

Als "Kaolin calciniert" wurde Satintone^{®} W (von HM Royal) eingesetzt.

Anschliessend wurden die beiden Komponenten jeder Zusammensetzung mittels des Zentrifugalmischers zu einer homogenen Paste verarbeitet und wie folgt beschrieben geprüft.

Die Zeit bis zur Klebefreiheit **(Tack Free Time** oder abgekürzt **TFT)** wurde bestimmt, indem 20 g der vermischten Zusammensetzung in einer Schichtdicke von ca. 2 mm auf Pappkarton aufgetragen und im Normklima die Zeitdauer bestimmt wurde, bis beim leichten Antippen der Oberfläche der applizierten Zusammensetzung mittels einer Pipette aus LDPE erstmals keine Rückstände auf der Pipette mehr zurückblieben.

Zur Bestimmung der mechanischen Eigenschaften wurde die vermischte Zusammensetzung auf einem silikonbeschichteten Trennpapier zu einem Film von 2 mm Dicke aufgebracht, dieser während 7 Tagen im Normklima aushärten lassen, einige hantelförmige Prüfkörper mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit, Bruchdehnung** und **E-Modul 5%** (bei 0.5-5% Dehnung) und teilweise auch **E-Modul 50%** (bei 0.5-50% Dehnung) geprüft. Weiter wurden einige Prüfkörper zur Bestimmung des **Weiterreisswiderstands** ausgestanzt und gemäss DIN ISO 34-1, Verfahren B (winkelförmiger Prüfkörper) bei einer Zuggeschwindigkeit von 500 mm/min geprüft.

Die **Shore A** Härte wurde nach DIN 53505 an während 7 Tagen im Normklima gehärteten Prüfkörpern (Durchmesser 20 mm, Dicke 5 mm) bestimmt. Diese Resultate sind mit dem Zusatz **"7d NK"** versehen. Zur Bestimmung der Beständigkeit gegen Hitze und Wasser wurden weitere Shore A-Prüfkörper nach 7 Tagen Aushärtung im Normklima entweder zusätzlich während 7 Tagen in einem Umluftofen bei 100 °C gelagert oder zusätzlich während 7 Tagen bei 70 °C und 100 % relativer Feuchtigkeit gelagert und nach Abkühlen auf Raumtemperatur die Shore A-Härte bestimmt. Diese Resultate sind mit dem Zusatz **"+7d 100°C"** bzw. **"+7d 70/100"** versehen.

Die Resultate sind in den Tabellen 1 bis 3 angegeben.

Die mit **"(Ref.)"** bezeichneten Beispiele sind Vergleichsbeispiele.

**Tabelle 1: Zusammensetzung und Eigenschaften von Z-1 bis Z-6.**

| **Beispiel** | | | **Z-1** | **Z-2 (Ref.)** | **Z-3** | **Z-4 (Ref.)** | **Z-5** | **Z-6 (Ref.)** |
|---|---|---|---|---|---|---|---|---|
| **Komponente K1:** | | | | | | | | |
| | Polymer **A-1** | | 30.0 | 30.0 | 30.0 | 30.0 | 30.0 | 30.0 |
| | Diisodecylphthalat | | 20.0 | 20.0 | 20.0 | 20.0 | 20.0 | 20.0 |
| | CaCOs gefällt | | 30.0 | 30.0 | 30.0 | 30.0 | 30.0 | 30.0 |
| | Russ | | 10.0 | 10.0 | 10.0 | 10.0 | 10.0 | 10.0 |
| | Morpholin | | 0.9 | - | 0.9 | - | 0.9 | - |
| | DBU ¹ | | - | 0.3 | - | 0.3 | - | 0.3 |

| **Komponente K2:** | | | | | | | | |
|---|---|---|---|---|---|---|---|---|
| Verbindung **B-1** | | | 1.5 | 1.5 | 2.3 | 2.3 | 3.05 | 3.05 |
| Verhältnis (I) / Ald ² | | | 0.67 | 0.67 | 1.0 | 1.0 | 1.33 | 1.33 |
| TFT [h:min] | | | 3:23 | 4:40 | 2:15 | 2:41 | 1:52 | 1:49 |
| Zugfestigkeit [MPa] | | | 2.1 | 1.6 | 4.3 | 3.1 | 4.3 | 4.0 |
| Bruchdehnung [%] | | | 425 | 250 | 408 | 253 | 290 | 205 |
| E-Modul 5% [MPa] | | | 0.7 | 0.9 | 1.6 | 1.5 | 2.7 | 2.6 |
| E-Modul 50% [MPa] | | | 0.65 | 0.8 | 1.4 | 1.4 | 2.1 | 2.3 |
| Weiterreisswiderstand [N/mm] | | | 6.3 | 3.7 | 7.8 | 4.8 | 6.0 | 4.5 |
| Shore A | | (7d NK) | 24 | 24 | 39 | 38 | 49 | 48 |
| (+ 7d 100°C) | | | 50 | 59 | 55 | 63 | 56 | 66 |
| (+ 7d 70/100) | | | 26 | 23 | 39 | 39 | 47 | 44 |

| | | | | | | | | |
|---|---|---|---|---|---|---|---|---|
| ¹ 1,8-Diazabicyclo[5.4.0]undec-7-en ² Verhältnis der Anzahl aktivierte Methylengruppen der Formel (I) zur Anzahl Aldehydgruppen | | | | | | | | |

**Tabelle 2: Zusammensetzung und Eigenschaften von Z-7 bis Z-12.**

| **Beispiel** | | **Z-7** | **Z-8 (Ref.)** | **Z-9** | **Z-10 (Ref.)** | **Z-11** | **Z-12 (Ref.)** |
|---|---|---|---|---|---|---|---|
| **Komponente K1:** | | | | | | | |
| | Polymer **A-1** | 30.0 | 30.0 | 30.0 | 30.0 | 30.0 | 30.0 |
| | Diisodecylphthalat | 20.0 | 20.0 | 20.0 | 20.0 | 20.0 | 20.0 |
| | CaCOs gefällt | 30.0 | 30.0 | 30.0 | 30.0 | 30.0 | 30.0 |
| | Russ | 10.0 | 10.0 | 10.0 | 10.0 | 10.0 | 10.0 |
| | Morpholin | 0.9 | - | 0.9 | - | 0.9 | - |
| | DBU ¹ | - | 0.3 | - | 0.3 | - | 0.3 |

| **Komponente K2:** | | | | | | | |
|---|---|---|---|---|---|---|---|
| | Verbindung **B-1** | 3.8 | 3.8 | 4.6 | 4.6 | 5.3 | 5.3 |
| Verhältnis (I) / Ald ² | | 1.67 | 1.67 | 2.0 | 2.0 | 2.33 | 2.33 |
| TFT [h:min] | | 1:37 | 1:36 | 1:32 | 1:31 | 1:28 | 1:26 |
| Zugfestigkeit [MPa] | | 4.3 | 4.2 | 4.5 | 4.0 | 4.4 | 4.2 |
| Bruchdehnung [%] | | 233 | 170 | 205 | 150 | 185 | 150 |
| E-Modul 5% [MPa] | | 3.3 | 3.4 | 3.7 | 3.4 | 4.1 | 3.7 |
| E-Modul 50% [MPa] | | 2.6 | 2.9 | 3.0 | 3.2 | 3.2 | 3.3 |
| Weiterreisswiderstand [N/mm] | | 5.2 | 4.2 | 4.9 | 4.0 | 4.6 | 4.0 |
| Shore A | (7d NK) | 52 | 58 | 55 | 60 | 58 | 60 |
| (+ 7d 100°C) | | 62 | 62 | 65 | 68 | 66 | 68 |
| (+ 7d 70/100) | | 52 | 50 | 54 | 53 | 57 | 51 |

| | | | | | | | |
|---|---|---|---|---|---|---|---|
| ¹ 1,8-Diazabicyclo[5.4.0]undec-7-en ² Verhältnis der Anzahl aktivierte Methylengruppen der Formel (I) zur Anzahl Aldehydgruppen | | | | | | | |

**Tabelle 3: Zusammensetzung und Eigenschaften von Z-13 und Z-14.**

| **Beispiel** | | | **Z-13** | **Z-14 (Ref** |
|---|---|---|---|---|
| **Komponente K1:** | | | | |
| | Polymer **A-1** | | 29.00 | 29.00 |
| | Verbindung **B-1** | | 2.64 | 2.64 |
| | Weichmacher ¹ | | 19.35 | 19.35 |
| | Kaolin calciniert | | 35.46 | 35.46 |
| | Russ | | 12.90 | 12.90 |
| | Epoxysilan ² | | 0.65 | 0.65 |

| **Komponente K2:** | | | | |
|---|---|---|---|---|
| | Morpholin | | 1.0 | - |
| | DBU ³ | | - | 0.5 |
| Verhältnis (I) / Aldehydgruppen ⁴ | | | 1.2 | 1.2 |
| TFT [h:min] | | | 1:55 | 0:26 |
| Zugfestigkeit | | [MPa] | 6.7 | 4.2 |
| Bruchdehnung | | [%] | 109 | 47 |
| E-Modul 5% | | [MPa] | 4.8 | 7.0 |
| Weiterreisswiderstand [N/mm] | | | 4.7 | 3.2 |
| Shore A | | (7d NK) | 65 | 71 |
| | | (+ 7d 100°C) | 76 | 76 |
| | | (+ 7d 70/100) | 62 | 69 |

| | | | | |
|---|---|---|---|---|
| ¹ n-Butanol-gestartetes acetyliertes PPG-Monol, hergestellt aus der Umsetzung von Synalox^{®} 100-20B (mittleres Molekulargewicht Mₙ ca. 750 g/mol, vonDow) und Essigsäureanhydrid unter destillativer Enfernung von Essigsäure ² 3-Glycidoxypropyltrimethoxysilan ³ 1,8-Diazabicyclo[5.4.0]undec-7-en ⁴ Verhältnis der Anzahl aktivierte Methylengruppen der Formel (I) zur Anzahl Aldehydgruppen | | | | |

Aus den Tabellen 1 bis 3 ist ersichtlich, dass die mit Morpholin als Beschleuniger ausgehärteten Zusammensetzungen eine höhere Zugfestigkeit, höhere Dehnung und einen höheren Weiterreisswiderstand aufweisen, als wenn DBU als Beschleuniger eingesetzt wurde. Besonders attraktive mechanische Eigenschaften, insbesondere eine sehr hohe Dehnbarkeit mit hoher Zugfestigkeit und einen besonders hohen Weiterreisswiderstand, wurde für die Zusammensetzungen **Z-3** bei einem Verhältnis der Anzahl Acetoacetat- zur Anzahl Aldehydgruppen von 1.0 erhalten.

Die Komponente **K1** der Zusammensetzung **Z13** ist lagerstabil. Ihre Viskosität wurde nach einer Lagerzeit im verschlossenen Gebinde während 1d im Normklima (NK) und während 7d in einem Umluftofen bei 40 °C gemessen. Nach 1d im NK betrug die Viskosität 555 Pa s, nach 7d bei 40 °C betrug die Viskosität 686 Pa s.

## Patentansprüche

1. Härtbare Zusammensetzung umfassend
- mindestens ein Polymer **A** mit Aldehydgruppen und einem mittleren Molekulargewicht Mₙ von 750 bis 20'000 g/mol, gemessen mittels Gelpermeationschromatographie (GPC) gegen Polystyrol als Standard,
- mindestens eine Verbindung **B** mit aktivierten Methylengruppen der Formel (I), 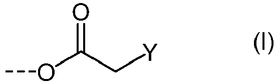 wobei Y für einen Rest der Formel ---CN , 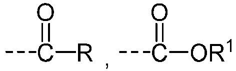 oder 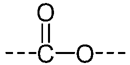 steht, R für einen einwertigen Kohlenwasserstoffrest mit 1 bis 10 C-Atomen steht und R¹ für einen Alkylrest mit 1 bis 6 C-Atomen steht,
und
- mindestens einen Beschleuniger **C** enthaltend mindestens eine sekundäre Aminogruppe.

2. Zusammensetzung gemäss Anspruch 1, **dadurch gekennzeichnet, dass** das Verhältnis der Anzahl aktivierte Methylengruppen der Formel (I) zur Anzahl Aldehydgruppen im Bereich von 0.6 bis 2.5, bevorzugt 0.7 bis 2.0, mehr bevorzugt 0.8 bis 1.7, besonders bevorzugt 0.9 bis 1.5, insbesondere 0.9 bis 1.2, liegt.

3. Zusammensetzung gemäss einem der Ansprüche 1 oder 2, **dadurch gekennzeichnet, dass** das Polymer **A** ein mittleres Molekulargewicht Mₙ von 1'000 bis 15'000 g/mol, insbesondere 2'000 bis 10'000 g/mol, und eine mittlere Aldehyd-Funktionalität von 1.6 bis 4.0, bevorzugt 1.8 bis 3.5, besonders bevorzugt 2.0 bis 3.0, insbesondere 2.2 bis 3.0, aufweist.

4. Zusammensetzung gemäss einem der Ansprüche 1 bis 3, **dadurch gekennzeichnet, dass** das Polymer **A** ein Polyetherpolymer ist.

5. Zusammensetzung gemäss einem der Ansprüche 1 bis 4, **dadurch gekennzeichnet, dass** die Aldehydgruppen des Polymers **A** direkt an einen aromatischen Ring gebunden sind.

6. Zusammensetzung gemäss einem der Ansprüche 1 bis 5, **dadurch gekennzeichnet, dass** die Verbindung **B** in Bezug auf die aktivierten Methylengruppen der Formel (I) ein Equivalentgewicht, oder im Fall einer oligomeren oder polymeren Verbindung **B** mittleres Equivalentgewicht, von 100 bis 2'100 g/eq, bevorzugt 114 bis 600 g/eq, insbesondere 114 bis 400 g, und eine Funktionalität, oder im Fall einer oligomeren oder polymeren Verbindung **B** mittlere Funktionalität, von 1.5 bis 4, bevorzugt 1.8 bis 3.5, mehr bevorzugt 2 bis 3, insbesondere 2.3 bis 3, aufweist.

7. Zusammensetzung gemäss einem der Ansprüche 1 bis 6, **dadurch gekennzeichnet, dass** Y für 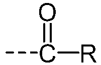 steht, wobei R insbesondere für Methyl steht und die aktivierten Methylengruppen der Formel (I) somit Acetoacetatgruppen sind,
wobei die Verbindung **B** insbesondere ausgewählt ist aus der Liste bestehend aus 1,2-Propandioldiacetoacetat, Dipropylenglykoldiacetoacetat, Tripropylenglykoldiacetoacetat, 1,3-Propandioldiacetoacetat, 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat, Polytetrahydrofuran-diacetoacetat mit mittlerem Molekulargewicht Mₙ von 350 bis 2'000 g/mol, dem Triacetoacetat von propoxyliertem und/oder ethoxyliertem 1,1,1-Trimethylolpropan mit insgesamt einem mittleren Molekulargewicht Mₙ von 500 bis 1'000 g/mol, Poly-(oxy-1,2-propylen)diol-bis(acetoacetat), Ethylenoxid-Einheiten enthaltendem Poly(oxy-1,2-propylen)diol-bis(acetoacetat), Rizinusöl-bis(acetoacetat), Rizinusöl-tris(acetoacetat), Dimerfettsäure-basiertem Polyesterdiol-bis(acetoacetat) und Trimerfettsäure-basiertem Polyestertriol-tris(acetoacetat).

8. Zusammensetzung gemäss einem der Ansprüche 1 bis 7, **dadurch gekennzeichnet, dass** der Beschleuniger **C** ein sekundäres Amin ist, welches frei ist von primären Amingruppen.

9. Zusammensetzung gemäss einem der Ansprüche 1 bis 8, **dadurch gekennzeichnet, dass** der Beschleuniger **C** Morpholin ist.

10. Zusammensetzung gemäss einem der Ansprüche 1 bis 9, **dadurch gekennzeichnet, dass** bezogen auf die gesamte Zusammensetzung 10 bis 95 Gewichts-%, bevorzugt 20 bis 90 Gewichts-%, insbesondere 30 bis 80 Gewichts-%, Füllstoffe und 5 bis 80 Gewichts-%, insbesondere 10 bis 60 Gewichts-%, Weichmacher enthalten sind.

11. Zusammensetzung gemäss einem der Ansprüche 1 bis 10, **dadurch gekennzeichnet, dass** die Zusammensetzung eine Komponente **K1** und eine Komponente **K2** umfasst, welche jeweils für sich allein lagerstabil sind und in voneinander getrennten Gebinden gelagert werden.

12. Verfahren zum Aushärten der härtbaren Zusammensetzung gemäss einem der Ansprüche 1 bis 11, **dadurch gekennzeichnet, dass** die Inhaltsstoffe oder Komponenten miteinander vermischt werden und die vermischte Zusammensetzung auf mindestens ein Substrat appliziert wird und aushärtet.

13. Ausgehärtete Zusammensetzung erhalten aus dem Verfahren zum Aushärten gemäss Anspruch 12, wobei die ausgehärtete Zusammensetzung insbesondere eine Bruchdehnung von mindestens 100 %, bevorzugt mindestens 150 %, insbesondere mindestens 200 %, aufweist, bestimmt gemäss DIN EN 53504 bei einer Zuggeschwindigkeit von 200 mm/min an hantelförmigen Prüfkörpern (Dicke 2 mm, Länge 75 mm, Steglänge 30 mm, Stegbreite 4 mm), und wobei die ausgehärtete Zusammensetzung insbesondere einen Weiterreisswiderstand von mindestens 4 N/mm, insbesondere mindestens 5 N/mm, aufweist, bestimmt gemäss DIN ISO 34-1 Verfahren B (winkelförmiger Prüfkörper) bei einer Probendicke von 2 mm und einer Zuggeschwindigkeit von 500 mm/min.

14. Verwendung der Zusammensetzung gemäss einem der Ansprüche 1 bis 11 als elastischer Klebstoff, elastischer Dichtstoff oder elastische Beschichtung, wobei die Inhaltsstoffe oder Komponenten miteinander vermischt werden und die vermischte Zusammensetzung im flüssigen Zustand auf mindestens ein Substrat appliziert wird.

15. Verwendung gemäss Anspruch 14, wobei die ausgehärtete Zusammensetzung eine Schichtdicke von mindestens 1 mm, bevorzugt 1 bis 50 mm, insbesondere 1.5 bis 25 mm, aufweist.
